(19) Europäisches Patentamt
European Patent Office
Office européen des brevets

(11) EP 1 003 817 B1

(12) EUROPÄISCHE PATENTSCHRIFT

(45) Veröffentlichungstag und Bekanntmachung des Hinweises auf die Patenterteilung:
**09.02.2005 Patentblatt 2005/06**

(21) Anmeldenummer: **98945108.3**

(22) Anmeldetag: **29.07.1998**

(51) Int Cl.[7]: **C08L 69/00**, C08K 3/00, C08K 5/52 // (C08L69/00, 69:00, 55:02, 27:18), C08L85:02

(86) Internationale Anmeldenummer:
**PCT/EP1998/004731**

(87) Internationale Veröffentlichungsnummer:
**WO 1999/007791 (18.02.1999 Gazette 1999/07)**

(54) **FLAMMWIDRIGE POLYCARBONAT ABS-FORMMASSEN**

FLAME-RESISTANT POLYCARBONATE ABS MOULDING MATERIALS

MATIERES DE MOULAGE EN ABS POLYCARBONATE IGNIFUGES

(84) Benannte Vertragsstaaten:
**BE CH DE DK ES FR GB IT LI NL**

(30) Priorität: **11.08.1997 DE 19734666**

(43) Veröffentlichungstag der Anmeldung:
**31.05.2000 Patentblatt 2000/22**

(73) Patentinhaber: **Bayer MaterialScience AG**
**51368 Leverkusen (DE)**

(72) Erfinder:
- **ECKEL, Thomas**
  **D-41540 Dormagen (DE)**
- **WITTMANN, Dieter**
  **D-51375 Leverkusen (DE)**
- **KELLER, Bernd**
  **D-47608 Geldern (DE)**
- **ALBERTS, Heinrich**
  **D-51519 Odenthal (DE)**

(56) Entgegenhaltungen:

| | |
|---|---|
| **EP-A- 0 390 064** | **EP-A- 0 769 526** |
| **EP-A- 0 783 019** | **US-A- 3 166 606** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft mit Phosphorverbindungen flammwidrig ausgerüstete Polycarbonat-ABS-Formmassen, die ein ausgezeichnetes mechanisches Eigenschaftsniveau, insbesondere eine hervorragende Spannungsrißbeständigkeit und Flammschutzverhalten aufweisen.

In EP-A 0 174 493 werden flammgeschützte, halogenhaltige Polymermischungen aus aromatischem Polycarbonat, styrolhaltigem Pfropfcopolymer, Monophosphaten und einer speziellen Polytetrafluorethylen-Formulierung beschrieben. Im Brandverhalten und mechanischen Werte-Niveau sind diese Mischungen zwar ausreichend, aber bei hohen Verarbeitungstemperaturen können auf den Formkörpern Beeinträchtigungen der Oberflächenqualität auftreten. Außerdem zeigen Formkörper Defizite bei der Spannungsrißbeständigkeit.

In EP-A 0 363 608 werden Polymermischungen aus aromatischem Polycarbonat, styrolhaltigem Copolymer oder Pfropfcopolymer sowie oligomeren Phosphaten als Flammschutzadditive beschrieben. Zur Herstellung dünnwandiger Gehäuseteile ist die Spannungsrißbeständigkeit dieser Mischungen oft nicht ausreichend.

EP-A 771 851 beschreibt Formmassen, die aromatisches Polycarbonat, Pfropfcopolymer auf Basis von Dien-Kautschuk, SAN-Copolymer einem Phosphat und Tetrafluorethylen-Polymere enthalten, wobei das Polycarbonat unterschiedliche Molekulargewichte hat. Als Bestandteil der Formmassen werden jedoch keine feinstteiligen anorganischen Verbindungen beschrieben.

Aufgabe der vorliegenden Erfindung war es, flammwidrige Polycarbonat-ABS-Formmassen herzustellen, die eine ausgezeichnete Spannungsrißbeständigkeit neben sehr guten Verarbeitungseigenschaften aufweisen, und die insbesondere zur Herstellung dünnwandiger Gehäuseteile geeignet sind.

Es wurde überraschenderweise gefunden, daß bei Verwendung bestimmter Gemische von Polycarbonaten mit jeweils deutlich unterschiedlichen Lösungsviskositäten in Kombination mit feinstteiligen anorganischen Verbindungen Polycarbonat-ABS-Formmassen resultieren, die eine deutlich bessere Spannungsrißbeständigkeit aufweisen.

Gegenstand der Erfindung sind daher flammwidrige, thermoplastische Formmassen enthaltend

A. 5 bis 95, vorzugsweise 10 bis 90, bevorzugt 20 bis 80 Gew.-Teile eines Gemisches zweier aromatischer Polycarbonate A.1 und A.2 unterschiedlicher Lösungsviskosität, wobei

1. die relative Lösungsviskosität von A.1 1,18 bis 1,24 beträgt,
2. die relative Lösungsviskosität von A.2 1,24 bis 1,34 beträgt und
3. die Differenz der relativen Lösungsviskositäten von A.1 und A.2 größer oder gleich 0,06 ist,

wobei ein oder mehrere weitere Polycarbonate dem Gemisch aus A.1 und A.2 zugesetzt werden können,

B. 0 bis 50, vorzugsweise 1 bis 30, besonders bevorzugt 2 bis 25 Gew.-Teile (Co)Polymerisat aus einem oder wenigstens zwei ethylenisch ungesättigen Monomeren,

C. 0,5 bis 60, vorzugsweise 1 bis 40, besonders bevorzugt 2 bis 30 Gew.-Teile Pfropfpolymerisate, erhältlich durch Pfropfpolymerisation von mindestens 2 Monomeren ausgewählt aus der Gruppe von Chloropren, Butadien, Isopren, Styrol, Acrylnitril, Ethylen, Propylen, Vinylacetat und (Meth)-Acrylsäueester mit 1 bis 18 C-Atomen in der Alkoholkomponente,

D. 0,5 bis 20 Gew.-Teilen, bevorzugt 1 bis 18 Gew.-Teilen, besonders bevorzugt 2 bis 15 Gew.-Teilen Phosphorverbindung der Formel (I)

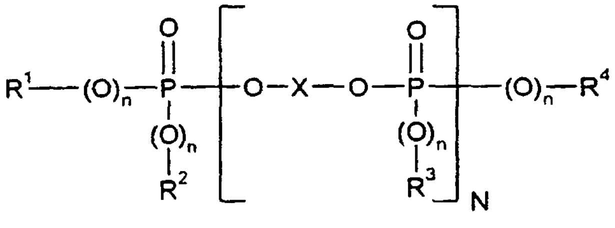

(I)

worin

$R^1$, $R^2$, $R^3$ und $R^4$, unabhängig voneinander gegebenenfalls halogeniertes $C_1$-$C_8$-Alkyl, jeweils gegebenenfalls durch Halogen und/oder $C_1$-$C_4$-Alkyl substituiertes $C_5$-$C_6$-Cycloalkyl, $C_6$-$C_{20}$-Aryl oder $C_7$-$C_{12}$-Aralkyl,

n unabhängig voneinander 0 oder 1,

N 0 bis 30 und

X einen ein- oder mehrkernigen aromatischen Rest mit 6 bis 30 C-Atomen bedeuten,

E. 0,05 bis 5 Gew.-Teile, vorzugsweise 0,1 bis 1 Gew.-Teil, besonders bevorzugt 0,1 bis 0,5 Gew.-Teile fluoriertes Polyolefin,

F. 0,01 bis 50 Gew.-Teile, vorzugsweise 0,1 bis 10 Gew.-Teile pro 100 Gew.-Teile A bis E feinstteilige anorganische Verbindung mit einem mittleren Teilchendurchmesser von kleiner gleich 200 nm, vorzugsweise kleiner gleich 150 nm, insbesonder kleiner gleich 100 nm.

Die Summe aller Gewichtsteile A + B + C + D + E+F ergibt 100.

Die erfindungsgemäßen Formmassen eignen sich aufgrund ihrer ausgezeichneten Flammwidrigkeit, Spannungsrißbeständigkeit und sehr guten Verarbeitungseigenschaften insbesondere zur Herstellung dünnwandiger Formteile (Datentechnik-Gehäuseteile), wo hohe Verarbeitungstemperaturen und -Drücke zu einer erheblichen Belastung des eingesetzten Materials führen.

**Komponente A**

Erfindungsgemäß geeignete, thermoplastische, aromatische Polycarbonate gemäß Komponente A sind solche auf Basis der Diphenole der Formel (II)

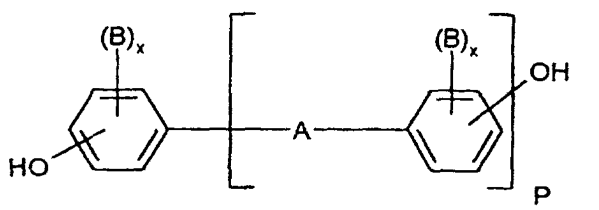

(II)

worin

A eine Einfachbindung $C_1$-$C_5$-Alkylen, $C_2$-$C_5$-Alkyliden, $C_5$-$C_6$-Cycloalkyliden, -S-, -$SO_2$-, -O-, -CO-, $C_6$-$C_{12}$-Arylen,

B Chlor, Brom,

x 0, 1 oder 2 und

p 1 oder 0 sind

oder alkylsubstituierte Dihydroxyphenylcycloalkane der Formel (III),

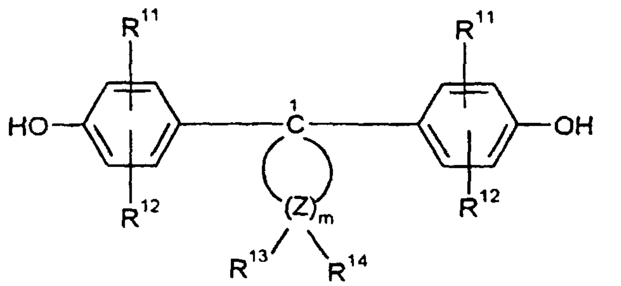

(III)

worin

R11 und R12 — unabhängig voneinander, jeweils Wasserstoff, Halogen, bevorzugt Chlor oder Brom, $C_1$-$C_8$-Alkyl, bevorzugt $C_1$-$C_4$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m — eine ganze Zahl von 4 bis 7, bevorzugt 4 oder 5,

$R^{13}$ und $R^{14}$ — für jedes Z individuell wählbar, unabhängig voneinander Wasserstoff oder $C_1$-$C_6$-Alkyl, vorzugsweise Wasserstoff, Methyl oder Ethyl,
und

Z — Kohlenstoff bedeutet, mit der Maßgabe, daß an mindestens einem Atom Z $R^{13}$ und $R^{14}$ gleichzeitig Alkyl bedeuten.

Geeignete Diphenole der Formel (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (III) sind Dihydroxydiphenylcycloalkane mit 5 und 6 Ring-C-Atomen im cycloaliphatischen Rest (m = 4 oder 5 in Formel (III) wie beispielsweise die Diphenole der Formeln

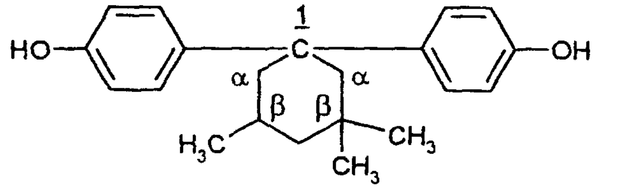

(IIIa)

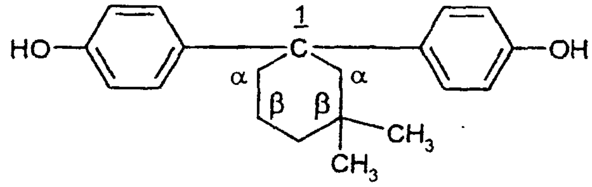

(IIIb)

und

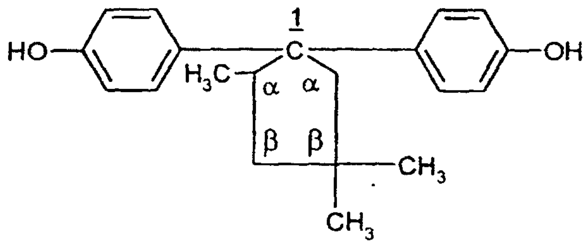

(IIIc)

wobei das 1,1-Bis-(4-hydroxyphenyl)-3,3,5-trimethylcyclohexyn (Formel (IIIa) besonders bevorzugt ist.

Die erfindungsgemäß geeigneten Polycarbonate gemäß Komponente A können in bekannter Weise verzweigt sein, und zwar vorzugsweise durch den Einbau von 0,05 bis 2,0 Mol-%, bezogen auf die Summe der eingesetzten Diphenole, an dreioder mehr als dreifunktionellen Verbindungen, z.B. solchen mit drei oder mehr als drei phenolischen Gruppen, wie beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,4-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4,4-bis-(4-hydroxyphenyl)-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4"dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan.

Die aromatischen Polycarbonate der Komponente A können teilweise durch aromatische Polyestercarbonate ausgetauscht werden.

Die aromatischen Polycarbonate der Komponente A können auch Polysiloxan-Blöcke enthalten. Deren Herstellung wird beispielsweise in der DE-OS 33 34 872 und in der US-PS 3 821 325 beschrieben.

Aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 077 934).

Die Herstellung aromatischer Polycarbonate und/oder aromatischer Polyestercarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäurehalogeniden, nach dem Phasengrenzflächenverfahren, gegebenenfalls unter Verwendung der Kettenabbrecher und gegebenenfalls unter Verwendung der trifunktionellen oder mehr als trifunktionellen Verzweiger.

Vorzugsweise haben die Polycarbonate A.1 und A.2 dieselben Strukturen, d.h. sie sind aus dengleichen Monomeren aufgebaut.

Besonders bevorzugt sind sowohl die Polycarbonate A.1 und A.2 als auch gegebenenfalls weiteres zugesetztes Polycarbonat A aus den selben Monomeren aufgebaut d.h. sie haben die gleiche chemische Struktur.

Ein weiteres Polycarbonat wird vorzugsweise bis zu einer Menge von 30 Gew.-% (bezogen auf die Menge aus A.1 und A.2) zugesetzt.

Bezogen auf das Gemisch der Polycarbonate A. 1 und A.2 beträgt der Gewichtsanteil A.1 5 bis 95, vorzugsweise 10 bis 75 Gew.-%, insbesondere 10 bis 35 Gew.-% und der Gewichtsanteil A.2 95 bis 5, vorzugsweise 90 bis 25 Gew.-%, insbesondere 90 bis 65 Gew.-%.

Das Gemisch der Polycarbonate A.1 und A.2 zeichnet sich dadurch aus, daß die relative Lösungsviskosität von A.1 1,18 bis 1,24 beträgt, daß die relative Lösungsviskosität von A.2 1,24 bis 1,34 beträgt und daß die Differenz der relativen Lösungsviskositäten von A.1 und A.2 größer oder gleich 0,06, insbesondere größer oder gleich 0,09 ist, d.h. relative Lösungsviskosität (A.2) minus relative Lösungsviskosität (A.1) $\geq$ 0,06, insbesondere $\geq$ 0,09 ist. Die relative Lösungsviskosität wird gemessen in $CH_2Cl_2$ als Lösungsmittel bei 25°C bei einer Konzentration von 0,5 g/100 ml.

Ein oder beide Polycarbonat-Bestandteile A.1 oder A.2 im Gemisch können ein recycliertes Polycarbonat sein. Unter recycliertem Polycarbonat werden solche Produkte verstanden, die bereits einen Verarbeitungs- und Lebenszyklus hinter sich haben und durch spezielle Aufarbeitungsverfahren von anhaftenden Verunreinigungen soweit befreit worden sind, daß sie für weitere Anwendungen geeignet sind.

## Komponente B

Das thermoplastische Polymer B umfaßt (Co)Polymere von einem oder wenigstens zwei ethylenisch ungesättigten Monomeren (Vinylmonomeren) wie beispielsweise Styrol, $\alpha$-Methylstyrol, kernsubstituierte Styrole (z.B. halogen- und/oder alkylkernsubstituiert), Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

Die (Co)Polymerisate gemäß Komponente B sind harzartig, thermoplastisch und kautschukfrei. Die Formmasse kann auch verschiedene (Co)Polymerisate B enthalten.

Bevorzugte Vinyl-(Co)Polymerisate B sind solche aus wenigstens einem Monomeren aus der Reihe Styrol, $\alpha$-Methylstyrol, kemsubstituiertem Styrol und/oder Methylmethacrylat (B.1) mit wenigstens einem Monomeren aus der Reihe Acrylnitril, Methacrylnitril, Methylmethacrylat, Maleinsäureanhydrid und/oder N-Aryl-substituiertem-Maleinimid (B.2).

Der Gehalt an Monomeren B.1 im (Co)Polymer beträgt vorzugsweise 50 bis 99, besonders bevorzugt 60 bis 95 Gew.-%, der an Monomeren B.2 vorzugsweise 1 bis 50, besonders bevorzugt 40 bis 5 Gew.-%.

Besonders bevorzugte (Co)Polymerisate B sind solche aus Styrol mit Acrylnitril und gegebenenfalls mit Methylmethacrylat, aus $\alpha$-Methylstyrol mit Acrylnitril und gegebenenfalls mit Methylmethacrylat, oder aus Styrol und $\alpha$-Methylstyrol mit Acrylnitril und gegebenenenfalls mit Methylmethacrylat.

Die (Co)Polymerisate gemäß Komponente B sind bekannt und lassen sich durch radikalische Polymerisation, insbesondere durch Emulsions-, Suspensions-, Lösungsoder Massepolymerisation herstellen. Die (Co)Polymerisate gemäß Komponente B besitzen vorzugsweise Molekulargewichte $\overline{M}_w$ (Gewichtsmittel, ermittelt durch Lichtstreuung oder Sedimentation) zwischen 15 000 und 200 000.

Besonders bevorzugte erfindungsgemäße (Co)Polymerisate B sind auch statistisch aufgebaute Copolymerisate aus Styrol und Maleinsäureanhydrid, die bevorzugt durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, 2,4-Dimethylstyrol und andere substituierte Styrole, wie $\alpha$-Methylstyrol, enthalten.

Die Molekulargewichte (Zahlenmittel $\overline{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60 000 bis 200 000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff).

## Komponente C

Die erfindungsgemäße Komponente C stellt Pfropfpolymerisate dar. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate C sind partiell vernetzt und besitzen Gelgehalte von über 20 Gew.-%, vorzugsweise über 40 Gew.-%, insbesondere über 60 Gew.-%.

Bevorzugte Pfropfpolymerisate C umfassen Pfropfpolymerisate aus:

C.1 5 bis 95, vorzugsweise 30 bis 80 Gew.-Teile, einer Mischung aus

C.1.1 50 bis 99 Gew.-Teilen Styrol, α-Methylstyrol, halogenoder methylkernsubstituierten Styrolen, Methylmethacrylat oder Mischungen dieser Verbindungen und

C.1.2 1 bis 50 Gew.-Teilen Acrylnitril, Methacrylnitril, Methylmethacrylat, Maleinsäureanhydrid, $C_1$-$C_4$-alkylbzw phenyl-N-substituierten Maleinimiden oder Mischungen dieser Verbindungen auf

C.2 5 bis 95, vorzugsweise 20 bis 70 Gew.-Teilen Polymerisat auf Dienund/oder Alkylacrylat-Basis mit einer Glasübergangstemperatur unter -10°C,

Bevorzugte Pfropfpolymerisate C sind z.B. mit Styrol und/oder Acrylnitril und/oder (Meth)-Acrylsäurealkylestern gepfropfte Grundlagen C.2 wie Polybutadiene, Butadien/Styrol-Copolymerisate und Acrylatkautschuke; d.h. Copolymerisate der in der DE-OS 1 694 173 (=US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 2 348 377 (=US-PS 3 919 3S3) beschrieben sind.

Besonders bevorzugte Polymerisate C sind z.B. ABS-Polymerisate, wie sie z.B. in der DE-OS 2 035 390 (=-US-PS 3 644 574) oder in der DE-OS 2 248 242 (=GB-PS 1 409 275) beschrieben sind.

Besonders bevorzugte Pfropfpolymerisate C sind erhältlich durch Pfropfreaktion von

α 10 bis 70, vorzugsweise 15 bis 50, insbesondere 20 bis 40 Gew.-%, bezogen auf Pfropfpolymisat C, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfaugflage C. 1 auf.

β 30 bis 90, vorzugsweise 50 bis 85, insbesondere 60 bis 80 Gew.-%, bezogen auf Pfropfpolymisat C, eines Butadienpolymerisats mit mindestens 50 Gew.-%, bezogen auf β, Butadienresten als Pfropfgrundlage C.2,

wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser $d_{50}$ des Pfropfpolymerisats C.2 0,05 bis 2 μm, vorzugsweise 0,1 bis 0,6 μm beträgt.

(Meth)-Acrylsäureester α sind Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate C sind z.B. auch Pfropfpolymerisate aus

τ. 20 bis 90 Gew.-%, bezogen auf Komponente C, Acrylatkautschuk mit einer Glasübergangstemperatur <-20°C als Pfropfgrundlage C.2 und

δ. 10 bis 80 Gew.-%, bezogen auf Komponente C, mindestens eines polymerisierbaren, ethylenisch ungesättigten Monomeren als Pfropfmonomere C.1.

Die Acrylatkautschuke τ der Polymerisate C sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinylund Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage $\tau$.

Bei cyclischen vernetzenden Monomeren mit mindestens 3 ethylenisch ungesättigten Gruppen ist es vorteilhaft, die Menge auf unter 1 Gew.-% der Pfropfgrundlage $\tau$ zu beschränken.

Bevorzugt "andere" polymerisierbare, ethylenisch ungesättigte Monomere, die neben den Acrylsäureestern gegebenenfalls zur Herstellung der Pfropfgrundlage $\tau$ dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage $\tau$ sind Emulsionspolymerisate, die einen Gelgehalt von mindestens 60 Gew.-% aufweisen.

Weitere geeignete Pfropfgrundlagen gemäß C.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrund C.2 wird bei 25°C in Dimethylformamid bestimmt (M. Hoffmann, H. Krömer, R. Kuhn, Polymeranalytik I und II, Georg Thieme-Verlag, Stuttgart 1977).

Die Pfropfpolymerisate C können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomere in Gegenwart der Pfropfgrundlage gewonnen werden.

__Komponente D__

Die erfindungsgemäßen Formmassen enthalten als Flammschutzmittel wenigstens eine organische Phosphorverbindung bzw. ein Gemisch organischer Phosphorverbindungen der Formel (I).

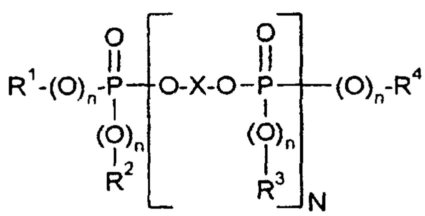

(I)

In der Formel haben $R^1$, $R^2$, $R^3$ und $R^4$ die oben angegebenen Bedeutungen. Bevorzugt stehen $R^1$, $R^2$, $R^3$ und $R^4$ für $C_1$-$C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen und/oder Alkylgruppen (vorzugsweise $C_1$-$C_4$-Alkyl) substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (I) bedeutet einen ein- oder mehrkernigen aromatischen Rest mit 6 bis 30 C-Atomen. Dieser leitet sich vorzugsweise von Diphenolen gemäß Formel (II) ab wie z.B. Bisphenol A, Resorcin oder Hydrochinon oder deren chlorierte oder bromierte Derivate.

n in der Formel (I) kann, unabhängig voneinander 0 oder 1 sein, vorzugsweise ist n gleich 1.

N kann Werte von 0 bis 30 annnehmen.

Bei Gemischen von Phosphorverbindungen kann N durchschnittliche Werte von 0 bis 30 annehmen, vorzugsweise einen durchschnittlichen Wert von 0,3 bis 20, besonders bevorzugt 0,5 bis 10, insbesondere 0,5 bis 6. In diesem Gemisch können Monophosphorverbindungen und/oder oligomere Phosphorverbindungen enthalten sein. Im Falle von N = 0 beschreibt die Formel (I) Monophosphorverbindungen.

Phosphorverbindungen der Formel (I) sind vorzugsweise Tributylphosphat, Tris-(2-chlorethyl)-phosphat,

Tris-(2,3-dibrompropyl)-phosphat, Triphenylphosphat, Trikresylphosphat, Diphenylkresylyphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und/oder m-Phenylen-bis(diphenyl)-phosphat.

Mischungen aus Phosphorverbindungen der Formel (I) mit N-Werten von 0,5 bis 10, insbesondere 0,5 bis 6 sind besonders bevorzugt.

Vorzugsweise werden in der Mischung monomere und oligomere Phosphorverbindungen der Formel (I) so gewählt, daß eine synergistische Wirkung erzielt wird. Die Mischung besteht im allgemeinen aus 10 bis 90 Gew.-% aus dimeren und/oder oligomeren und aus 90 bis 10 Gew.-% aus Monophosphorverbindungen, vorzugsweise Mono-Phosphatverbindungen der Formel (I). Vorzugsweise werden die Mono-Phosphorverbindungen im Bereich von 12 bis 50, insbesondere von 14 bis 40, ganz besonders bevorzugt von 15 bis 40 Gew.-% mit der komplementären Menge an oligomeren Phosphorverbindungen gemischt.

Die Phosphorverbindungen gemäß Komponente D sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

## Komponente E

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1.000, vorzugsweise 0,08 bis 20 µm. Im allgemeinen haben die fluorierten Polyolefine E eine Dichte von 1,2 bis 2,3 g/cm$^3$.

Bevorzugte fluorierte Polyolefine E sind Polytetrafluorethylen, Polyvinylidenfluorid, Tetrafluorethylen/Hexafluorpropylen- und Ethylen/Tetrafluorethylen-Copolymerisate.

Die fluorierten Polyolefine sind bekannt (vgl. "Vinyl and Related Polymers" von Schildknecht, John Wiley & Sons, Inc., New York, 1962, Seite 484 bis 494; "Fluor-polymers" von Wall, Wiley-Interscience, John Wiley & Sons, Inc., New York, Band 13, 1970, Seite 623 bis 654; "Modern Plastics Encyclopedia", 1970 bis 1971, Band 47, Nr. 10A, Oktober 1970, Mc Graw-Hill, Inc., New York, Seite 134 und 774; "Modern Plastics Encyclopedia", 1975 bis 1976, Oktober 1975, Band 52, Nr. 10A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat bei Drücken von 7 bis 71 kg/cm$^2$ und bei Temperaturen von 0 bis 200°C, vorzugsweise bei Temperaturen von 20 bis 100°C. (Nähere Einzelheiten siehe z.B. US-Patent 2 393 967). Je nach Einsatzform kann die Dichte dieser Materialien zwischen 1,2 und 2,3 g/cm$^3$, die mittlere Teilchengröße zwischen 0,05 und 1.000 µm liegen.

Erfindungsgemäß bevorzugte fluorierte Polyolefine E sind Tetrafluorethylenpolymerisate und haben mittlere Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E mit Emulsionen der Pfropfpolymerisate C eingesetzt.

Geeignete Tetrafluorethylenpolymerisat-Emulsionen sind handelsübliche Produkte und werden beispielsweise von der Firma DuPont als Teflon® 30 N angeboten.

Geeignete, in Pulverform einsetzbare fluorierte Polyolefine E sind Tetrafluorethylenpolymerisate mit mittleren Teilchendurchmessern von 100 bis 1.000 µm und Dichten von 2,0 g/cm$^3$ bis 2,3 g/cm$^3$.

Zur Herstellung einer koagulierten Mischung aus C und E wird zuerst eine wäßrige Emulsion (Latex) eines Pfropfpolymerisates C mit mittleren Latexteilchendurchmessern von 0,05 bis 2 µm, insbesondere 0,1 bis 0,6µm, mit einer feinteiligen Emulsion eines Tetrafluorethylenpolymerisates E in Wasser mit mittleren Teilchendurchmessern von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%.

Die wäßrige Emulsion des Pfropfpolymerisats C besitzt Feststoffgehalte von 25 bis 60 Gew.-%, vorzugsweise von 30 bis 45 Gew.-%, insbesondere von 30 bis 35 Gew.-%.

Die Mengenangabe bei der Beschreibung der Komponente C schließt den Anteil des Pfropfpolymerisats in der koagulierten Mischung aus Pfropfpolymerisat und fluorierten Polyolefinen nicht mit ein.

In der Emulsionsmischung liegt das Gewichtsverhältnis Pfropfpolymerisat C zum Tetrafluorethylenpolymerisat E bei 95:5 bis 60:40. Die Emulsionsmischung wird in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

**Komponente F**

Feinstteilige anorganische Verbindungen gemäß Komponente F bestehen aus Verbindungen eines oder mehrerer Metalle der 1. bis 5. Hauptgruppe oder 1, bis 8. Nebengruppe des Periodensystems nach Mendelejew, bevorzugt 2. bis 5. Hauptgruppe oder 4. bis 8. Nebengruppe, besonders bevorzugt 3. bis 5. Hauptgruppe oder 4. bis 8. Nebengruppe mit wenigstens einem Element ausgewählt aus der Gruppe bestehend aus Sauerstoff, Schwefel, Bor, Phosphor, Kohlenstoff, Stickstoff, Wasserstoff oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$,WC, ZnO, $Al_2O_3$, AlO(OH), $ZrO_2$, $Sb_2O_3$, $SiO_2$, Eisenoxide, $Na_2SO_4$, $BaSO_4$, Vanadiumoxide, Zinkborat, Silicate wie Al-Silikate, Mg-Silikate, ein, zwei, dreidimensionale Silikate. Mischungen und dotierte Verbindungen sind ebenfalls verwendbar. Desweiteren können diese nanoskaligen Partikeln mit organischen Molekülen oberflächenmodifiziert sein, um eine bessere Verträglichkeit mit der Matrix zu erzielen. Auf diese Weise lassen sich hydrophobe oder hydrophile organische Oberflächen erzeugen.

Die durchschnittlichen Teilchendurchmesser sind kleiner gleich 200 nm, vorzugsweise kleiner gleich 150 nm, insbesondere von 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Solen oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln oder in Thermoplaste A die Cofällung von Dispersionen der Komponenten B oder C mit Dispersion, Suspensionen, Pasten oder Solen der feinstteiligen anorganischen Materialien dar.

Die erfindungsgemäßen Formmassen können wenigstens eines der üblichen Additive, wie Gleit- und Entformungsmittel, Nukleiermittel, Antistatika, Stabilisatoren sowie Farbstoffe und Pigmente enthalten.

Die erfindungsgemäßen Formmassen können gegebenenfalls von Verbindungen der Formel (I) verschiedene Flammschutzmittel in einer Menge bis zu 20 Gew.-Teilen enthalten. Bevorzugt sind synergistisch wirkende Flammschutzmittel. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze oder Siloxanverbindungen genannt. Die erfindungsgemäßen Formmassen können gegebenenfalls von den anorganischen Verbindungen F abweichende anorganische Substanzen enthalten wie beispielsweise anorganische Hydroxidverbindungen wie Mg-, Al-hydroxid, anorganische Verbindungen wie Aluminiumoxid, Antimon-oxide, Barium-metaborat, Hydroxoantimonat, Zirkon-oxid, Zirkon-hydroxid, Molybdän-oxid, Ammonium-molybdat, Zink-borat, Ammonium-borat und Zinnoxid.

Die erfindungsgemäßen Formmassen enthaltend die Komponenten A bis F und gegebenenfalls weitere bekannte Zusätze wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente E vorzugsweise in Form der oben erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpem jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Computer, Drucker, Monitore oder Kopierer oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an das Fließverhalten und Spannungsrißbeständigkeit der eingesetzten Kunststoffe gestellt werden.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der obengenannten sowie die Formkörper aus den erfindungsgemäßen Formmassen.

**Beispiele**

**Komponente A**

**A**

Lineares Polycarbonat auf Basis Bisphenol A mit einer relativen Lösungsviskosität von 1,252, gemessen in $CH_2Cl_2$ als Lösungsmittel bei 25°C und in einer Konzentration von 0,5g/100 ml.

**A.1**

Lineares Polycarbonat auf Basis Bisphenol A mit einer relativen Lösungsviskosität von 1,284, gemessen in $CH_2Cl_2$ als Lösungsmittel bei 25°C und in einer Konzentration von 0,5 g/100 ml.

**A.2**

Lineares Polycarbonat auf Basis Bisphenol A mit einer relativen Lösungsviskosität von 1,200, gemessen in $CH_2Cl_2$ als Lösungsmittel bei 25°C und in einer Konzentration von 0,5 g/100 ml.

**Komponente B**

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

**Komponente C**

Pfropfpolymerisat von 45 Gew.-Teilen eines Copolymerisats aus Styrol und Acrylnitril im Verhältnis von 72: 28 auf 55 Gew.-Teile teilchenförmigen vernetzten Polybutadienkautschuk (mittlerer Teilchendurchmesser $d_{50}$ = 0,4µm), hergestellt durch Emulsionspolymerisation.

**Komponente D**

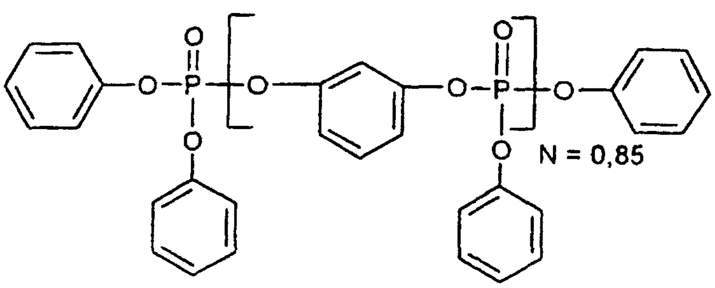

N = 0,85

**Komponente E**

Tetrafluorethylenpolymerisat als koagulierte Mischung aus einer SAN-Pfropfpolymerisat-Emulsion gemäß Komponente C in Wasser und einer Tetrafluorethylenpolymerisat-Emulsion in Wasser. Das Gewichtsverhältnis Pfropfpolymerisat C zum Tetrafluorethylenpolymerisat E in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5µm. Die SAN-Pfropfpolymerisat-Emulsion besitzt einen Feststoffgehalt von 34 Gew.-% und einen mittleren

Latexteilchendurchmesser von 0,4µm.

**Herstellung von E**

Die Emulsion des Tetrafluorethylenpolymerisats (Teflon 30 N der Fa. DuPont) wird mit der Emulsion des SAN-Pfropfpolymerisats C vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Komponente F**

Als feinstteilige anorganische Verbindung wird Pural 200, ein Aluminiumoxidhydroxid (Fa. Condea, Hamburg, Deutschland), eingesetzt. Die mittlere Teilchengröße des Produktes beträgt ca. 50 nm.

**Herstellung und Prüfung der erfindungsgemäßen Formmassen**

Das Mischen der Komponenten A bis F erfolgt auf einem 3 1-Innenkneter. Die Formkörper werden auf einer Spritzgießmaschine Typ Arburg 270E bei 260°C hergestellt.

Die Bestimmung der Kerbschlagzähigkeit erfolgt nach Methode ISO 180 1A an Stäben der Abmessung 80 x 10 x 4 $mm^3$ bei Raumtemperatur.

Die Bestimmung der Wärmeformbeständigkeit nach Vicat B erfolgt gemäß DIN 53 460.

Das Spannungsrißverhalten wird an Stäben der Abmessung 80 x 10 x 4 $mm^3$, Massetemperatur 260°C untersucht. Als Testmedium wird eine Mischung aus 60 Vol.-% Toluol und 40 Vol.-% Isopropanol verwendet. Die Probekörper werden mittels einer Kreisbogenschablone vorgedehnt und 5 min bei Zimmertemperatur im Testmedium simultan gelagert. Die Vordehnung $\varepsilon_x$ beträgt 0,2 bis 2,4 %. Das Spannungsrißverhalten wird über die Rißbildung bzw. den Bruch in Anhängigkeit der Vordehnung beurteilt.

Die Zusammensetzung der geprüften Materialien sowie die erhaltenen Daten sind in der folgenden Tabelle 1 zusammengefaßt.

Aus der Tabelle geht hervor, daß die erfindungsgemäßen Formmassen eine sehr gute Eigenschaftskombination der mechanischen Eigenschaften, insbesondere eine unerwartete Verbesserung der Spannungsrißbeständigkeit sowie eine gute Flammwidrigkeit im Vergleich zu den Formmassen, welche keine feinstteiligen anorganischen Pulver (Komponente F) enthalten.

Tabelle 1

| Zusammensetzung und Eigenschaften der Polycarbonat-ABS-Formmassen | | | |
|---|---|---|---|
| Beispiel | 1 Vergleich | 2 Vergleich | 3 erfindungsgemäß |
| Komponenten | | | |
| [Gew.-Teile] A | 79 | - | - |
| A1 | - | 49 | 49 |
| A2 | - | 30 | 30 |
| B | 5 | 5 | 5 |
| C | 5 | 5 | 5 |
| D | 5,5 | 5,5 | 5,5 |
| E | 3 | 3 | 3 |
| F | - | - | 1,0 |
| Entformungsmittel | 0,5 | 0,5 | 0,5 |
| $\eta_{rel}$ | 1.252 | 1.252 | 1.252 |
| Eigenschaften: Vicat/$B_{120}$ [°C] | 114 | 115 | 115 |
| Kerbschlagzähigkei t: [kJ/$m^2$] | 44 | 46 | 46 |

Tabelle 1 (fortgesetzt)

| Zusammensetzung und Eigenschaften der Polycarbonat-ABS-Formmassen | | | |
|---|---|---|---|
| Beispiel | 1 Vergleich | 2 Vergleich | 3 erfindungsgemäß |
| Komponenten | | | |
| ESC-screening 5 min/ 1,0 % | | | BR 5:00 |
| ESC-screening 5 min/ 0,8 % | | BR 5:00 | KR+OR |
| ESC-screening 5 min/ 0,6 % | BR 3:14 | KR+OR | |
| ESC-screening 5 min/ 0,4 % | KR | | |
| MVR 240°C/5 kg ml/10 min | 16,0 | 16,4 | 16,6 |
| Brand UL 94 V (1,6 mm) | V-2 | nb* | V-0 |

*nb = nicht bestanden
KR: Kantenrisse am Prüfkörper
OR: Oberrisse am Prüfkörper ESC: das Spannungsrissverhalten
BR: 5:00 den Bruch des Prüfkörpers nach 5 min.
BR: 3:14 den Bruch des Prüfkörpers nach 3 min. 14 sec

**Patentansprüche**

**1.** Flammwidrige, thermoplastische Formmassen enthaltend

A. 5 bis 95 Gew.-Teile eines Gemisches zweier aromatischer Polycarbonate A.1 und A.2 mit unterschiedlicher Lösungsviskosität, wobei

1. die relative Lösungsviskosität von A.1 1,18 bis 1,24 beträgt,

2. die relative Lösungsviskosität von A.2 1,24 bis 1,34 beträgt und

3. die Differenz der relativen Lösungsviskositäten von A.1 und A.2 größer oder gleich 0,06 ist,

wobei ein oder mehrere weitere Polycarbonate dem Gemisch aus A.1 und A.2 zugesetzt werden können,

B. 0 bis 50 Gew.-Teile Vinyl(co)polymerisat aus einem oder wenigstens zwei ethylenisch ungesättigten Monomeren,

C. 0,5 bis 60 Gew.-Teile Pfropfpolymerisat erhältlich durch Pfropfpolymerisation von wenigstens zwei Monomeren ausgewählt aus Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente,

D. 0,5 bis 20 Gew.-Teile Phosphorverbindung der Formel (I)

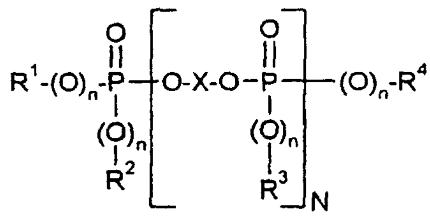

(I)

worin

| | |
|---|---|
| $R^1$, $R^2$, $R^3$ und $R^4$ | unabhängig voneinander, gegebenenfalls halogeniertes $C_1$-$C_8$-Alkyl, jeweils gegebenenfalls durch Halogen und/oder $C_1$-$C_4$-Alkyl substituiertes $C_5$-$C_6$-Cycloalkyl, $C_6$-$C_{20}$-Aryl oder $C_7$-$C_{12}$-Aralkyl, |
| n | unabhängig voneinander 0 oder 1, |
| N | 0 bis 30 und |
| X | einen ein- oder mehrkernigen aromatischen Rest mit 6 bis 30 C-Atomen bedeuten, |

E. 0,05 bis 5 Gew.-Teile fluoriertes Polyolefin

F. 0,01 bis 50 Gew.-Teile pro 100 Gew.-Teile aus A) bis E) feinstteilige anorganische Verbindung mit einem mittleren Teilchendurchmesser von kleiner gleich 200 nm,

**2.** Formmassen gemäß Anspruch 1, **dadurch gekennzeichnet, daß** in Formel (I) N einen Wert von 0,3 bis 20 besitzt.

**3.** Formmassen gemäß Anspruch 1 und 2, wobei Komponente B ein (Co)Polymer von einem oder wenigstens zwei ethylenisch ungesättigten Monomeren ausgewählt aus Styrol, $\alpha$-Methylstyrol, kernsubstituierte Styrole, Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

**4.** Formmassen gemäß Ansprüche 1 bis 3, wobei in Formel (I) $R^1$, $R^2$, $R^3$ und $R^4$ jeweils unabhängig voneinander, $C_1$-$C_4$-Alkyl, ein jeweils gegebenenfalls mit Halogen- und/oder Alkylgruppen substituiertes Phenyl, Naphtyl oder Phenyl-$C_1$-$C_4$-alkyl, bedeutet und X sich von Diphenolen, ausgewählt aus Bisphenol A, Resorcin oder Hydrochinon, gegebenenfalls chloriert oder bromiert, ableitet.

**5.** Formmassen nach einem der Ansprüche 1 bis 4, wobei die Phosphorverbindung der Formel (I) ausgewählt ist aus Tributylphosphat, Tris-(2-chlorethyl)-phosphat, Tris-(2,3-dibrompropyl)-phosphat, Triphenylphosphat, Trikresylphosphat, Diphenylkresylyphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid, Trikresylphosphinoxid und/oder m-Phenylen-bis(diphenyl)phosphat.

**6.** Formmassen nach Anspruch 1, wobei als fluorierte Polyolefine E, Polytetrafluorethylen, Polyvinylidenfluorid, Tetrafluorethylen/Hexafluorpropylenund/oder Ethylen/Tetrafluorethylen-Copolymerisate eingesetzt werden.

**7.** Formmassen nach Anspruch 1 enthaltend als Komponente F Verbindungen der 1. bis 5. Hauptgruppe oder 1 bis 8. Nebengruppe des Periodensystems mit mindestens einem Element ausgewählt aus der Gruppe bestehend aus Sauerstoff, Schwefel, Bor, Kohlenstoff, Phosphor, Stickstoff, Wasserstoff oder Silicium.

**8.** Formmassen gemäß der vorhergehenden Ansprüche, worin Komponente F ausgewählt ist aus TiN, $TiO_2$, $SnO_2$, WC, ZnO, $Al_2O_3$, AlO(OH), $ZrO_2$, $Sb_2O_3$, $SiO_2$, Zinkborat, $Na_2SO_4$, $BaSO_4$, Vanadiumoxide und/oder Silikate.

**9.** Formmassen gemäß der vorhergehenden Ansprüche, worin der mittlere Teilchendurchmesser der Komponente

F kleiner gleich 150 nm beträgt.

**10.** Formmassen nach Ansprüchen 1 bis 9, **dadurch gekennzeichnet, daß** sie 0,01 bis 20 Gew.-%, bezogen auf die Gesamtformmasse wenigstens eines weiteren von Komponente D verschiedenen Flammschutzmittels enthalten.

**11.** Formmassen nach einem der Ansprüche 1 bis 10, enthaltend 10 bis 90 Gew.Teile der Komponente A), gegebenenfalls 2 bis 30 Gew.-Teile der Komponente B), 1 bis 40 Gew.-Teile der Komponente C) und 1 bis 18 Gew.-Teile der Komponente D) 0,1 bis 1 Gew.-Teile E) und 0,1 bis 10 Gew.-Teile F).

**12.** Formmassen nach einem der Ansprüche 1 bis 11, enthaltend als Pfropfgrundlage für die Komponente C einen Dienkautschuk, Acrylatkautschuk, Silikonkautschuk oder Ethylen-Propylen-Dien-Kautschuk.

**13.** Formmassen nach einem der Ansprüche 1 bis 12, welche mindestens einen Zusatz aus der Gruppe der Stabilisatoren, Pigmente, Entformungsmittel, Fließhilfsmittel und/oder Antistatika enthalten.

**14.** Verwendung der Formmassen nach einem der Ansprüche 1 bis 13 zur Herstellung von Formkörpern.

**15.** Formkörper, hergestellt aus Formmassen nach einem der Ansprüche. 1 bis 13.

**Claims**

**1.** Flame-resistant, thermoplastic moulding compositions containing

A 5 to 95 parts by weight of a mixture of two aromatic polycarbonates A.1 and A.2 with different solution viscosities, wherein

1. the relative solution viscosity of A.1 is 1.18 to 1.24,

2. the relative solution viscosity of A.2 is 1.24 to 1.34 and

3. the difference between the relative solution viscosities of A.1 and A.2 is equal to or greater than 0.06,

wherein one or more further polycarbonates may be added to the mixture of A.1 and A.2,

B 0 to 50 parts by weight of a (co)polymer consisting of 1 or at least 2 ethylenically unsaturated monomers.

C 0.5 to 60 parts by weight of graft polymers, obtainable by graft polymerisation of at least two monomers selected from the group consisting of chloroprene, 1,3-butadiene, isoprene, styrene, acrylonitrile, ethylene, propylene, vinyl acetate and (meth)acrylates with 1 to 18 carbon atoms in the alcohol component,

D 0.5 to 20 parts by weight of a phosphorus compound of the formula (I)

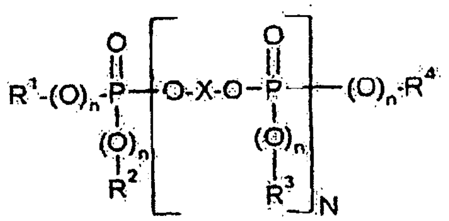

(I)

in which

$R^1$, $R^2$, $R^3$ and $R^4$, independently of each other, represent an optionally halogenated $C_1$ - $C_8$ alkyl group, or a $C_5$ - $C_6$ cycloalkyl, $C_6$ - $C_{20}$ aryl or $C_7$ - $C_{12}$ aralkyl group, each optionally substituted

| | |
|---|---|
| | by halogen and/or $C_1$ - $C_4$ alkyl groups |
| n | each, independently, represents 0 or 1 |
| N | is 0 to 30 and |
| X | represents a mono- or polynuclear aromatic group with 6 to 30 carbon atoms, |

E 0.05 to 5 parts by weight of a fluorinated polyolefin,

F 0.01 to 50 parts by weight of A to E of a very finely divided inorganic compound with an average particle diameter of less than or equal to 200 nm.

**2.** Moulding compositions according to Claim 1, **characterised in that** N has a value from 0.3 to 20 in formula (I).

**3.** Moulding compositions according to Claims 1 and 2, wherein component B a (co)polymer of one or at least two ethylenically unsaturated monomers selected from styrene, $\alpha$-methylstyrene, ring-substituted styrenes, acrylonitrile, methacrylonitrile, methyl methacrylate, maleic anhydride, N-substituted maleic imide and (meth)acrylates with 1 to 18 carbon atoms in the alcohol component.

**4.** Moulding compositions according to Claims 1 to 3, wherein, in formula (I), $R^1$, $R^2$, $R^3$ and $R^4$ each, independently of each other, represents $C_1$ - $C_4$ alkyl groups or phenyl, naphthyl or phenyl-$C_1$ - $C_4$ alkyl groups, each optionally substituted with halogen and/or alkyl groups, and X is derived from diphenols selected from bisphenol-A, resorcinol or hydroquinone, which are optionally chlorinated or brominated.

**5.** Moulding compositions according to one of Claims 1 to 4, wherein the phosphorus compound in formula (I) is selected from tributyl phosphate, tris-(2-chloroethyl) phosphate, tris-(2,3-dibromopropyl) phosphate, triphenyl phosphate, tricresyl phosphate, diphenylcresyl phosphate, diphenyloctyl phosphate, diphenyl-2-ethylcresyl phosphate, tri-(isopropylphenyl) phosphate, halogen-substituted aryl phosphates, dimethyl methylphosphonate, diphenyl methylphosphonate, diethyl phenyl phosphonate, triphenylphosphine oxide, tricresylphosphine oxide and/or m-phenylene-bis(diphenyl) phosphate.

**6.** Moulding compositions according to Claim 1, wherein, as fluorinated polyolefins E, polytetrafluoroethylene, polyvinylidene fluoride, tetrafluoroethylene/hexafluoropropylene and/or ethylene/tetrafluoroethylene copolymers are used.

**7.** Moulding compositions according to Claim 1, containing, as component F, compounds from groups 1A to 5A and 1B to 8B of the periodic system of elements with the elements oxygen, sulphur, boron, carbon, phosphorus , nitrogen, hydrogen or silicon.

**8.** Moulding compositions according to the preceding Claims, in which component F is selected from TiN, $TiO_2$, $SnO_2$, WC, ZnO, $Al_2O_3$, AlO(OH), $ZrO_2$, $Sb_2O_3$, $SiO_2$, zinc borate, $NaSO_4$, $BaSO_4$, vanadium oxides and/or silicates.

**9.** Moulding compositions according to the preceding Claims, in which the average particle diameter of component F is less than or equal to 150 nm.

**10.** Moulding compositions according to Claims 1 to 9, **characterised in that** they contain 0.01 to 20 wt.%, with respect to the total moulding composition, of at least one further flame-resistant agent which differs from component D.

**11.** Moulding compositions according to one of Claims 1 to 10, containing 10 to 90 parts by weight of component A), optionally 2 to 30 parts by weight of component B), 1 to 40 parts by weight of component C) and 1 to 18 parts by weight of component D) 0.1 to 1 part by weight of E) and 0.1 to 10 parts by weight of F).

**12.** Moulding compositions according to one of Claims 1 to 11, containing as graft substrate for component C a diene rubber, acrylate rubber, silicone rubber or ethylene/propylene/diene rubber.

**13.** Moulding compositions according to one of Claims 1 to 12, which contain at least one additive from the group of stabilisers, pigments, mould release agents, flow promoters and/or anti-static agents.

**14.** Use of moulding compositions according to one of Claims 1 to 13, to produce moulded items.

**15.** Moulded items produced from moulding compositions according to one of Claims 1 to 13.

**Revendications**

**1.** Matières à mouler thermoplastiques ignifuges contenant

A. 5 à 95 parties en poids d'un mélange de deux polycarbonates aromatiques A.1 et A.2 à des viscosités différentes en solution, à savoir

1. 1,18 à 1,24 pour la viscosité relative en solution de A.1,
2. 1,24 à 1,34 pour la viscosité relative en solution de A.2 et
3. une différence supérieure ou égale à 0,06 entre la viscosité relative en solution de A.1 et la viscosité relative en solution de A.2,

le mélange de A.1 et A.2 pouvant encore contenir un ou plusieurs autres polycarbonates,

B. 0 à 50 parties en poids d'un (co)polymère vinylique d'un ou d'au moins deux monomères à insaturation éthylénique,

C. 0,5 à 60 parties en poids d'un polymère greffé obtenu par polymérisation greffée d'au moins deux monomères choisis parmi le chloroprène, le butadiène-1,3, l'isoprène, le styrène, l'acrylonitrile, l'éthylène, le propylène, l'acétate de vinyle et les esters (méth)acryliques contenant 1 à 18 atomes de carbone dans le composant alcoolique,

D. 0,5 à 20 parties en poids d'un dérivé du phosphore répondant à la formule (I)

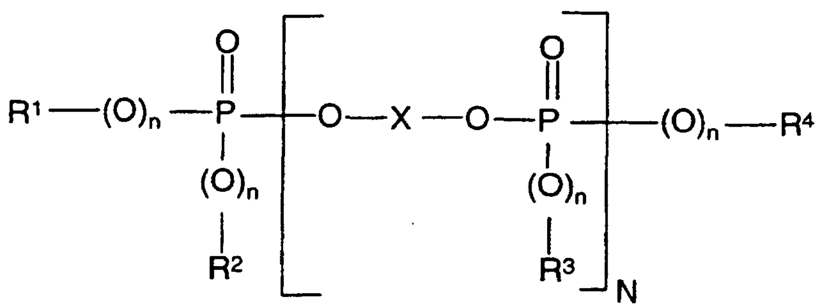

(I)

dans laquelle

$R^1$, $R^2$, $R^3$ et $R^4$ représentent chacun, indépendamment les uns des autres, un groupe alkyle en $C_1$-$C_8$ éventuellement halogéné, un groupe cycloalkyle en $C_5$-$C_6$, aryle en $C_6$-$C_{20}$ ou aralkyle en $C_7$-$C_{12}$, chacun d'eux éventuellement substitué par des halogènes et/ou des groupes alkyle en $C_1$-$C_4$,

les divers indices n sont égaux chacun, indépendamment les uns des autres, à 0 ou 1,

N est un nombre allant de 0 à 30 et
X est un radical aromatique mono- ou poly-cyclique contenant 6 à 30 atomes de carbone

E. 0,05 à 5 parties en poids d'une polyoléfine fluorée,

F. 0,01 à 50 parties en poids, pour 100 parties en poids de A à E, d'un composé inorganique en particules très fines, à un diamètre de particule moyen inférieur à 200 nm.

**2.** Matières à mouler selon la revendication 1 **caractérisées en ce que**, dans la formule (I), N est un nombre allant de 0,3 à 20.

**3.** Matières à mouler selon les revendications 1 et 2 pour lesquelles le composant B est un (co)polymère d'un ou d'au moins deux monomères à insaturation éthylénique choisis parmi le styrène, l'α-méthylstyrène, les styrènes substitués dans le noyau, l'acrylonitrile, le méthacrylonitrile, le méthacrylate de méthyle, l'anhydride maléique, les maléimides substitués à l'azote et les esters (méth)acryliques contenant 1 à 18 atomes de carbone dans le composant alcoolique.

**4.** Matières à mouler selon les revendications 1 à 3, pour lesquelles, dans la formule (I), $R^1$, $R^2$, $R^3$ et $R^4$ représentent chacun, indépendamment les uns des autres, un groupe alkyle en $C_1$-$C_4$, un groupe phényle, naphtyle ou phénylalkyle en $C_1$-$C_4$, chacun d'eux éventuellement substitué par des halogènes et/ou des groupes alkyle, et X dérive de diphénols choisis parmi le bisphénol A, le résorcinol et l'hydroquinone, éventuellement chlorés ou bromés.

**5.** Matières à mouler selon les revendications 1 à 4, pour lesquelles le dérivé du phosphore de formule (I) est choisi parmi le phosphate de tributyle, le phosphate de tris-(2-chloréthyle), le phosphate de tris-(2,3-dibromopropyle), le phosphate de triphényle, le phosphate de tricrésyle, le phosphate de diphényle et de crésyle, le phosphate de diphényle et d'octyle, le phosphate de diphényle et de 2-éthylcrésyle, le phosphate de tri-(isopropylphényle), les phosphates d'aryle substitués par des halogènes, le méthylphosphonate de diméthyle, le méthylphosphonate de diphényle, le phénylphosphonate de diéthyle, l'oxyde de triphénylphosphine, l'oxyde de tricrésylphosphine et/ou le m-phénylène-bis-(diphényl)phosphate.

**6.** Matières à mouler selon la revendication 1, pour lesquelles la polyoléfine fluorée E consiste en polytétrafluoréthylène, fluorure de polyvinylidène, copolymères tétrafluoréthylène/hexafluoropropylène et/ou éthylène/tétrafluoréthylène.

**7.** Matières à mouler selon la revendication 1 contenant, pour le composant F, des composés des groupes principaux 1 à 5 ou des sous-groupes 1 à 8 de la Classification Périodique, avec au moins un élément choisi dans le groupe consistant en l'oxygène, le soufre, le bore, le carbone, le phosphore, l'azote, l'hydrogène ou le silicium.

**8.** Matières à mouler selon les revendications qui précèdent, pour lesquelles le composant F est choisi parmi TiN, $TiO_2$, $SnO_2$, WC, ZnO, $Al_2O_3$, AlO(OH), $ZrO_2$, $Sb_2O_3$, $SiO_2$, le borate de zinc, $Na_2SO_4$, $BaSO_4$, les oxydes du vanadium et/ou les silicates.

**9.** Matières à mouler selon les revendications qui précèdent, pour lesquelles le diamètre de particule moyen du composant F est inférieur à 150 nm.

**10.** Matières à mouler selon les revendications 1 à 9, **caractérisées en ce qu'**elles contiennent de 0,01 à 20 % de leur poids total d'au moins un agent ignifugeant autre que ceux du composant D.

**11.** Matières à mouler selon l'une des revendications 1 à 10, contenant 10 à 90 parties en poids du composant A), le cas échéant 2 à 30 parties en poids du composant B), 1 à 40 parties en poids du composant C) et 1 à 18 parties en poids du composant D), 0,1 à 1 partie en poids de E) et 0,1 à 10 parties en poids de F).

**12.** Matières à mouler selon l'une des revendications 1 à 11 contenant, en tant que support de greffage pour le composant C, un caoutchouc diénique, un caoutchouc d'acrylates, un caoutchouc de silicones ou un caoutchouc éthylène-propylène-diène.

**13.** Matières à mouler selon l'une des revendications 1 à 12 contenant au moins un additif du groupe des stabilisants, des pigments, des agents de démoulage, des produits auxiliaires d'écoulement et/ou des agents antistatiques.

**14.** Utilisation des matières à mouler l'une des revendications 1 à 13 pour la fabrication d'objets moulés.

**15.** Objets moulés fabriqués à partir des matières à mouler selon l'une des revendications 1 à 13.